# EUROPEAN PATENT APPLICATION

(11) **EP 4 589 709 A1**
(43) Date of publication of application: **23.07.2025**
(21) Application number: 23914609.5
(22) Date of filing: 29.12.2023
(51) Int. Cl.: H01M 10/0525, H01M 4/505, H01M 4/62, H01M 4/525, H01M 4/485

(54) **POSITIVE ELECTRODE MATERIAL, PREPARATION METHOD THEREFOR, CATHODE ELECTRODE SHEET, ELECTRODE ASSEMBLY, BATTERY, AND ELECTRICAL DEVICE**

(30) Priority: 05.01.2023 CN 202310015267
(71) Applicant: Contemporary Amperex Technology (Hong Kong) Limited, Central (HK)
(72) Inventor: FU, Hanli, Ningde, Fujian 352100 (CN); LI, Zhenhua, Ningde, Fujian 352100 (CN); ZHU, Jiazhe, Ningde, Fujian 352100 (CN); LI, Xing, Ningde, Fujian 352100 (CN); NIU, Shaojun, Ningde, Fujian 352100 (CN); JIN, Haizu, Ningde, Fujian 352100 (CN)
(74) Representative: Kraus & Lederer PartGmbB
(86) International application number: PCT/CN2023/143469
(87) International publication number: WO 2024/146478

(57) **Abstract**

A positive electrode material and a preparation method thereof, a negative electrode plate, an electrode assembly, a battery, and an electric device relate to the technical field of batteries. The positive electrode material includes a laminar lithium-containing metal oxide which includes other positive ions with a radius greater than a radius of lithium ions. The radius of the other positive ions in the positive electrode material is greater than the radius of the lithium ions, so that the other positive ions may play a supporting role in a laminar structure to enhance a misalignment energy barrier, alleviate the problem of aggravated misalignment of metal ions and lithium ions in a laminar negative electrode, and improve the stability of the laminar structure, so as to improve the cycle performance. Moreover, the other positive ions in the positive electrode material may also be embedded into a negative electrode material, where the other positive ions with the greater ionic radius play a supporting role in graphite, so as to reduce expansion/shrinkage of the graphite in the process that the ions with the less ionic radius are intercalated/deintercalated, which contributes to improving the stability of an SEI film, reducing the consumption of active lithium, and improving the cycle performance.

## Description

### CROSS-REFERENCE TO RELATED APPLICATIONS

This application claims the priority of Chinese Patent Application No. 202310015267.7 filed on Jan. 5, 2023, the entire disclosure of which is incorporated herein by reference.

### TECHNICAL FIELD

This application relates to the technical field of batteries, and particularly relates to a positive electrode material and a preparation method thereof, a negative electrode plate, an electrode assembly, a battery, and an electric device.

### BACKGROUND

With the rapid growth of portable electronic devices and electric vehicles, the demand for power batteries has also been increasing continuously. In addition, the electrochemical performance of batteries is receiving increasing attention.

As a result of misalignment of lithium element and metal elements in a laminar positive electrode material, the overall life of the material is poor. For example, the increase of the nickel content causes misalignment of more lithium and nickel, so that the cycle life of the battery is shortened.

### SUMMARY

A major objective of this application is to provide a positive electrode material, which is intended to prolong the cycle life of a battery.

In order to achieve the above objective, this application provides a positive electrode material, including a laminar lithium-containing metal oxide, where the laminar lithium-containing metal oxide comprises other positive ions with a radius greater than a radius of lithium ions.

The radius of the other positive ions in the positive electrode material is greater than the radius of the lithium ions, so that the other positive ions may play a supporting role in a laminar material to enhance a misalignment energy barrier, alleviate the problem of aggravated misalignment of metal ions and lithium ions in a laminar negative electrode, and improve the stability of the laminar structure, so as to improve the cycle performance. Moreover, the other positive ions in the positive electrode material may also be embedded into a negative electrode material, where the other positive ions with the greater ionic radius play a supporting role in graphite, so as to reduce expansion/shrinkage of the graphite in the process that the ions with the less ionic radius are intercalated/deintercalated, which contributes to improving the stability of an SEI film, reducing the consumption of active lithium, and improving the cycle performance.

Optionally, the laminar lithium-containing metal oxide includes a laminar lithium-containing transition metal oxide; and/or
the ionic radius of the other positive ions is greater than 76 Pm.

Optionally, the ionic radius of the other positive ions is greater than 84 Pm and less than 100 Pm.

The laminar lithium-containing metal oxide includes a laminar lithium-containing transition metal oxide. Compared with other metals, transition metals in the laminar lithium-containing transition metal oxide are more liable to misalignment with lithium. By using the other positive ions with the radius greater than the diameter of lithium ions in the laminar lithium-containing transition metal oxide, the stability of the laminar structure may be effectively improved.

The radius of the lithium ions is 76 Pm, and the positive ions greater than 76 Pm can effectively play a supporting role in the laminar material to improve the stability of the laminar structure, thereby improving the cycle performance.

Optionally, the ionic radius of the other positive ions is greater than 84 Pm and less than 100 Pm. The ionic radius of the other positive ions is in a range of 84-100 Pm to guarantee that the other positive ions are effectively embedded into the laminar structure to play a supporting role in the laminar structure, so as to enhance the misalignment barrier, alleviate the problem of aggravated misalignment of the metal ions and lithium ions in the laminar negative electrode and improve the stability of the laminar structure, thereby improving the cycle performance.

Optionally, positions of the lithium ions in the laminar lithium-containing metal oxide structure are defined as lithium sites, and the other positive ions occupy at least part of the lithium sites in the laminar lithium-containing metal oxide structure.

In the laminar lithium-containing metal oxide structure, the elements have their own arrangement positions. Positions of the lithium ions in the laminar lithium-containing metal oxide structure are defined as lithium sites, and the other positive ions occupy at least part of the lithium sites in the laminar lithium-containing metal oxide structure. In order to reduce the misalignment of the lithium ions and the metal ions, part of lithium sites of the laminar positive electrode material are replaced with the other positive ions with a greater ionic radius. Moreover, the radius of the other positive ions is great and the other positive ions occupy the lithium sites stably, so that further misalignment is avoided. Therefore, the stability of the laminar structure is improved, and furthermore, the other positive ions replace the lithium sites, which can effectively reduce the problem of misalignment of lithium and nickel.

Optionally, the other positive ion elements includes at least one of an alkali metal element, an alkaline earth metal element, and a non-metallic element except for a lithium element.

The type of the other positive ions is not limited in this application, and the other positive ion elements include at least one of an alkali metal element, an alkaline earth metal element, and a non-metallic element except for a lithium element. It may be understood that ions may be ions with the radius theoretically greater than the radius of the lithium ions, preferably the metal ions.

Optionally, the alkali metal element includes at least one of Mn, Co, Ni, Cu, and Zn;
the alkaline earth metal element includes at least one of Ca and Sr; and
the non-metallic element includes Se.

It may be understood that the alkali metal element includes at least one of Na, K, Rb, and Cs; the alkaline earth metal element includes at least one of Ca and Sr; and the non-metallic element includes Se.

Optionally, a general formula of the laminar lithium-containing metal oxide is LiₓY₍₂₋ₓ₎NiₐCo_{b}Mn_{c}M_{(1-a-b-c)}O₂, Y representing the other positive ions, and M including at least one of Mg, Zr, Al, B, Ta, Mo, W, Nb, Sb and La, wherein 0.3≤a<1.0, 0<b<0.5, 0≤c≤0.2, a+b+c≤1, and 0<x<2.

According to the requirement and design of the laminar positive electrode material, from the earliest low-nickel material to the high-nickel material nowadays is used. The overall life of the high-nickel material is poor. On the one hand, the increase of the nickel content will inevitably result in misalignment of more lithium and nickel, which shortens the cycle life of the battery. Misalignment of lithium and nickel refers to a phenomenon that bivalent nickel ions occupy the positions in the lithium ion lattices due to an action of an external factor when a lot of lithium ions are deintercalated during discharging as the volumes of the bivalent nickel ions are approximate to those of the lithium ions. Ion dislocation leads to a change in the type of a lattice, and accordingly changes the lithium intercalation capability of the lattice. During charging and discharging, the surface of a positive electrode material has the maximum pressure and the fastest speed for lithium deintercalation and intercalation, so that the surface often undergoes a change in a surface lattice due to such cation misalignment, and this phenomenon is also referred to as surface reconstruction. The higher the nickel content is, the higher the probability that trivalent unstable nickel ions are reduced to bivalent nickel ion is, so the chance of misalignment of the positive ions is higher. Therefore, the cycle life of the battery is more severely shortened.

The nickel-containing positive electrode material is used in this application to improve the energy density, and moreover, on the basis of the other positive ions with the radius greater than the radius of the lithium ions contained in the positive electrode material, the problem of aggravated misalignment of the nickel ions and the lithium ions in the laminar negative electrode can be effectively alleviated, and the stability of the laminar structure is improved, so that the cycle performance is further improved.

**In** the general formula LiₓY₍₂₋ₓ₎NiₐCo_{b}Mn_{c}M_{(1-a-b-c)}O₂, 0<x<2, in the case of x>1, it indicates that the positive electrode material may be a lithium-rich material, for example, a lithium-rich manganese base.

Optionally, 0.6≤a<1.0 and 0.3<b<0.5.

**In** the general formula LiₓY₍₂₋ₓ₎NiₐCo_{b}Mn_{c}M_{(1-a-b-c)}O₂, 0.6≤a<1.0, 0.3<b<0.5, it indicates that the positive electrode material is a high-nickel material, which can effectively alleviate the problem of aggravated misalignment of the nickel ions and the lithium ions in the laminar negative electrode and improve the stability of the laminar structure, so that in the case of improving the cycle performance, the energy density can be effectively improved by using the high-nickel material.

Optionally, 0<x<1.

0<x<1. The positive electrode material can be a ternary material. Compared with other metals, the transition metals in the ternary material are more liable to misalignment with lithium. In this case, 0<x<1, indicating that in the general formula LiₓY₍₂₋ₓ₎NiₐCo_{b}Mn_{c}M_{(1-a-b-c)}O₂, the content of the other positive ions represented by Y is increased, which is beneficial to increase of the misalignment energy barrier, alleviate the problem of aggravated misalignment of the nickel ions and the lithium ions in the laminar negative electrode and improve the stability of the laminar structure, so that the cycle performance is improved.

This application provides a preparation method of a positive electrode material, including the following steps:
adding a metal salt into a solvent, and stirring the mixture to obtain a metal salt solution;
adding a precipitant into the metal salt solution to obtain a precursor; and
mixing the precursor, a lithium salt, and a salt of the other positive ions, and calcining the mixture to obtain the laminar lithium-containing metal oxide,
where a radius of the other positive ions in the salt of the other positive ions is greater than a radius of lithium ions.

The metal salt is added into the solvent, and the mixture is stirred to obtain the metal salt solution; the precipitant is added into the metal salt solution to obtain the precursor; and the precursor, a lithium salt, and the salt of the other positive ions are mixed, and the mixture is calcined to obtain the laminar lithium-containing metal oxide, where the radius of the other positive ions in the salt of the other positive ions is greater than the radius of the lithium ions.

The metal salt is precipitated with the precipitant to obtain the precursor, and the precursor and the salt of the lithium salt and the other positive ions are mixed, and calcined to obtain the laminar lithium-containing metal oxide, where the radius of the other positive ions in the salt of the other positive ions is greater than the radius of the lithium ions.

The radius of the other positive ions in the positive electrode material is greater than the radius of the lithium ions, so that the other positive ions may play a supporting role in a laminar material to enhance a misalignment energy barrier, alleviate the problem of aggravated misalignment of metal ions and lithium ions in a laminar negative electrode, and improve the stability of the laminar structure, so as to improve the cycle performance. Moreover, the other positive ions in the positive electrode material may also be embedded into a negative electrode material, where the other positive ions with the greater ionic radius play a supporting role in graphite, so as to reduce expansion/shrinkage of the graphite in the process that the ions with the less ionic radius are intercalated/deintercalated, which contributes to improving the stability of an SEI film, reducing the consumption of active lithium, and improving the cycle performance.

Optionally, a type of the salt of the other positive ions includes at least one of an alkali metal salt, an alkaline earth metal salt, and a non-metallic salt.

The type of the salt of the other positive ions is not limited in this application, and the type of the salt of the other positive ion elements includes at least one of an alkali metal salt, an alkaline earth metal salt, and a non-metallic salt. It may be understood that elements can be ions with the radius theoretically greater than the radius of the lithium ions, preferably the metal ions.

Optionally, the step of adding a precipitant into the metal salt solution to obtain a precursor includes the following steps:
adding the precipitant into the metal salt solution, performing a reaction for 3-20 h, and performing aging for 2-12 h to obtain the precursor.

It may be understood that the reaction lasts for 3-20 h. The reaction time is reaction time for generating primary particles. As the particles are crushed in the reaction process, ageing for 2-12 h may help the primary particle lattices repair and grow.

In the above 3-20 h, the value includes the minimum value and the maximum value of the range and each value between the minimum value and the maximum value. A specific example includes, but is not limited to, point values in the examples and 3 h, 5 h, 8 h, 10 h, 14 h, 16 h, 18 h, 20 h and the like.

Optionally, in the step of mixing the precursor, a lithium salt, and a salt of the other positive ions, and calcining the mixture to obtain the laminar lithium-containing metal oxide, the molar ratio of the precursor to the lithium salt to the salt of the other positive ions is defined as P:Q:R, meeting (Q+R)/P≥1.07.

The excessive lithium salt and the salt of the other positive ions are intended to compensate the loss of lithium and other positive ions in high-temperature calcining. Therefore, in the step of mixing the precursor, the lithium salt, and the salt of the other positive ions and calcining the mixture to obtain the laminar lithium-containing metal oxide, the lithium salt and the salt of the other positive ions are added excessively.

Optionally, calcining time in the calcining process is 17-28 h.

In the calcining process, the lithium element and the other positive ion elements can be more rapidly and uniformly blended into the lattices of the precursor material, so as to play doping roles of doping elements. In the above 17-28 h, the value includes the minimum value and the maximum value of the range and each value between the minimum value and the maximum value. A specific example includes, but is not limited to, point values in the examples and 17 h, 18 h, 19 h, 20 h, 21 h, 22 h, 25 h, 27 h, 28 h, and the like.

Optionally, a calcining program in the calcining process is as follows: raising the temperature from the room temperature to 400-500°C at a heating rate of 3°Cmin⁻¹-5°Cmin⁻¹, performing precalcining for 5-8 h, then raising the temperature to 700-900°C, and performing calcining for 12-20 h.

That is, in the calcining program, the heating rate may be 3°Cmin⁻¹, 4°Cmin⁻¹, and 5°Cmin⁻¹. At room temperature, the mixture is heated to 400°C, 450°C or 500°C at a certain heating rate, precalcined for 5 h, 6 h, 7 h or 8 h, then heated to 700°C, 800°C or 900°C, and calcined for 12 h, 13 h, 14 h, 15 h, 16 h, 18 h, 19 h or 20 h.

Optionally, the metal salt includes a transition metal salt;
and/or, the precipitant includes at least one of oxalate and carbonate.

The metal salt is not limited in this application. For example, it may be the transition metal salt, for example, including at least one of a nickel salt, a cobalt salt, and a manganese salt. It may be understood that the nickel salt is selected from one or more of nickel sulfate, nickel chloride, nickel nitrate, and nickel acetate. The manganese salt is selected from one or more of manganese sulfate, manganese chloride, manganese nitrate, and manganese acetate. The cobalt salt is selected from one or more of cobalt sulfate, cobalt chloride, cobalt nitrate, and cobalt acetate.

The precipitant may be at least one of oxalate and carbonate. It may be understood that the oxalate is selected from one or more of sodium oxalate, sodium hydrogen oxalate, potassium oxalate, potassium hydrogen oxalate, ammonium oxalate, and ammonium bioxalate. The carbonate is selected from one or more of sodium carbonate, sodium hydrogen carbonate, potassium carbonate, potassium hydrogen carbonate, ammonium carbonate, and ammonium hydrogen carbonate.

This application provides a negative electrode plate, including a current collector and a coating disposed on the current collector, the coating including the positive electrode material described above, or the coating including the positive electrode material prepared by the preparation method of the positive electrode material described above.

Because the radius of the other positive ions in the positive electrode material is greater than the radius of the lithium ions, the other positive ions may play a supporting role in a laminar material to enhance a misalignment energy barrier, alleviate the problem of aggravated misalignment of metal ions and lithium ions in a laminar negative electrode, and improve the stability of the laminar structure, so as to improve the cycle performance. Moreover, the other positive ions in the positive electrode material may also be embedded into a negative electrode material, where the other positive ions with the greater ionic radius play a supporting role in graphite, so as to reduce expansion/shrinkage of the graphite in the process that the ions with the less ionic radius are intercalated/deintercalated, which contributes to improving the stability of an SEI film, reducing the consumption of active lithium, and improving the cycle performance. Therefore, the negative electrode plate including the positive electrode material described above has high cycle performance.

Optionally, a compacted density Pd of the negative electrode plate meets the following relation: Pd=S*K, where S is a mass ratio of the positive electrode material to an entire positive electrode active material in the coating, K is a coefficient, 0<S≤100%, and 0<K<100.

The greater the S is, the stronger the hierarchical energy barrier of the negative electrode plate is, and so are the structural stability and the resistance to pressure. The negative electrode plate may realize a higher upper limit of the compacted density.

That is, the compacted density is in direct proportion to the S. The greater the compacted density is, the greater the incorporating amount of the needed positive electrode material is. The greater compacted density indicates that the gaps in the material become small. To expand the gaps, more other positive ions with the radius greater than the radius of the lithium ions are needed to support the material layer.

Optionally, the S and the K respectively meet the following relations: 10%<S<90% and 0<K<10.

Since part of lithium sites in the positive electrode material are replaced with other positive ions, if the positive electrode material is used in entire positive electrode active material, there will be a problem of lithium reduction, which results in a problem of energy density reduction. Therefore, the mass ratio of the positive electrode material in the entire positive electrode active material in the coating is 10%<S≤90%. Therefore, the entire positive electrode active material further includes other active materials such as other ternary materials. Lithium sites in the ternary materials are not replaced with other elements to improve the capacity of lithium, so that the energy density of the battery is improved.

Optionally, the entire positive electrode active material in the coating accounts for 85-99% of the total mass of the coating.

The entire positive electrode active material in the coating accounts for 85-99% of the total mass of the coating. In the above 85-99%, the value includes the minimum value and the maximum value of the range and each value between the minimum value and the maximum value. A specific example includes, but is not limited to, point values in the examples and 85%, 86%, 87%, 88%, 89%, 90%, 91%, 92%, 93%, 94%, 95%, 96%, 97%, 99%, and the like.

Optionally, a value of the compacted density of the negative electrode plate is in a range of 2.0 g/cm³ to 4.5 g/cm³.

With the increase of the compacted density, the volume density of the active layer will be increased, the porosity will be decreased, the specific surface area is increased, the contact resistance is decreased, the SEI impedance of an electrolyte interfacial film of an electrode will be decreased, and the charge exchange impedance is decreased. The lower compacted density, on the contrary, will lead to a problem of low specific discharge capacity, which is mainly because that the higher porosity enables part of particles form an insulative state and is unable to take part in charge and discharge while the electrode with high compacted density features higher breaking strength, which reduces the risk of the particles in the insulative state as the electrode particles fall off in the cyclic process. The high compacted density may make distribution of pore diameter and pores of the electrode more uniform significantly. The conductive agent and the binder are distributed more uniformly, the contact resistance and the charge exchange impedance of the electrode are reduced, and the active area capable of taking part in the reaction is increased, so that the electrochemical performance of the material is significantly improved.

Therefore, an appropriate compacted density is needed in the negative electrode plate. In this application, a value of the compacted density of the negative electrode plate is in a range of 2.0 g/cm³ to 4.5 g/cm³. When the compacted density of the negative electrode plate is lower than 2.0 g/cm³, the particles have poor contact and transmission impedance, fast life attenuation, and fail to improve the life. When the compacted density of the negative electrode plate is higher than 4.5 g/cm³, interlaminar pores are small, ions with great radius cannot be deintercalated, part of large ions cannot be deintercalated and intercalated into the graphite layer, so that expansion is reduced, resulting in partial failure in life improvement.

In the negative electrode plate, the value of the compacted density of the negative electrode plate is 2.0 g/cm³-4.5 g/cm³. The compacted density is set within the range, so that the problem that the compacted density is too low is alleviated. Moreover, the problem of partial failure in life improvement as the compacted density is too high, the gaps between the materials become small, part of large ions cannot be deintercalated and intercalated into the graphite layer, and the expansion is reduced is further alleviated.

Optionally, a value of the compacted density of the negative electrode plate is in a range of 2.8 g/cm³ to 3.5 g/cm³.

The value of the compacted density of the negative electrode plate is 2.8 g/cm³-3.5 g/cm³. In the above 2.8 g/cm³-3.5 g/cm³, the value includes the minimum value and the maximum value of the range and each value between the minimum value and the maximum value. A specific example includes, but is not limited to, point values in the examples and 2.8 g/cm³, 2.9 g/cm³, 3.0 g/cm³, 3.1 g/cm³, 3.2 g/cm³, 3.3 g/cm³, 3.4 g/cm³, 3.5 g/cm³, and the like.

This application further provides an electrode assembly, including a positive electrode plate, a separator, and the negative electrode plate described above.

Optionally, a negative electrode material of the positive electrode plate includes at least one of graphite, hard carbon, and soft carbon.

It may be understood that the negative electrode material of the positive electrode plate includes at least one of graphite, hard carbon, and soft carbon.

This application further provides a battery, including the electrode assembly described above.

This application further provides an electric device, including the battery described above.

The positive electrode material in this application includes the laminar lithium-containing metal oxide. The laminar lithium-containing metal oxide includes other positive ions with the radius greater than the radius of lithium ions. The radius of the other positive ions in the positive electrode material is greater than the radius of the lithium ions, so that the other positive ions may play a supporting role in a laminar material to enhance a misalignment energy barrier, alleviate the problem of aggravated misalignment of metal ions and lithium ions in a laminar negative electrode, and improve the stability of the laminar structure, so as to improve the cycle performance. Moreover, the other positive ions in the positive electrode material may also be embedded into a negative electrode material, where the other positive ions with the greater ionic radius play a supporting role in graphite, so as to reduce expansion/shrinkage of the graphite in the process that the ions with the less ionic radius are intercalated/deintercalated, which contributes to improving the stability of an SEI film, reducing the consumption of active lithium, and improving the cycle performance.

### DESCRIPTION OF DRAWINGS

To describe technical solutions in embodiments of this application or in the conventional technology more clearly, the following briefly describes the accompanying drawings for describing the embodiments or the conventional technology. It is clear that the accompanying drawings described in the following are merely some embodiments of this application. Those of ordinary skill in the art can still derive other accompanying drawings from the structures shown by these accompanying drawings without creative efforts.
FIG. 1 is a schematic diagram of a flow of a preparation method of a positive electrode material according to this application;
FIG. 2 is a schematic diagram of a battery cell according to an implementation of this application;
FIG. 3 is an exploded view of the battery cell shown in FIG. 2 according to an implementation of this application;
FIG. 4 is a schematic diagram of a battery module according to an implementation of this application;
FIG. 5 is a schematic diagram of a battery pack according to an implementation of this application;
FIG. 6 is an exploded view of the battery pack according to an implementation of this application shown in FIG. 2;
FIG. 7 is a schematic diagram of an electric apparatus in which an electrode assembly is used as a power supply according to an implementation of this application.

### Description of reference numerals:

| Reference numeral | Name | Reference numeral | Name |
|---|---|---|---|
| 1 | Battery pack | 51 | Housing |
| 2 | Upper case | 52 | Electrode assembly |
| 3 | Lower case | 53 | Cover plate |
| 4 | Battery module | 6 | Electric apparatus |
| 5 | Battery cell | | |

Purpose implementation, functional features, and advantages of this application are further described with reference to the embodiments and the accompanying drawings.

### DESCRIPTION OF EMBODIMENTS

The following describes in detail implementations specifically disclosing an electrolyte solution, an electrode assembly, a battery module, a battery pack, and an electric apparatus in this application with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

A "range" disclosed in this application is defined in terms of a lower limit and an upper limit. A given range is defined by
selecting a lower limit and an upper limit, and the selected lower limit and upper limit define a boundary of the special range. A range defined in this manner may include an end value or may not include an end value, and may be any combination, that is, any lower limit may be combined with any upper limit to form a range. For example, if ranges of 60~120 and 80~110 are listed for specific parameters, it is understood that the ranges of 60~110 and 80~120 are also expected. In addition, if the minimum range values 1 and 2 and the maximum range values 3, 4, and 5 are listed, the following ranges may be all expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, a numerical range of "0~5" represents that all real numbers in the range of "0~5" have been listed herein, and "0~5" is merely a shorthand representation of combinations of these numerical values. Further, when a parameter is represented as an integer≥2, it is equivalent to disclosing that the parameter is, for example, an integer 2, 3, 4, 5, 6, 7, 8, 9, 10, 11, 12, or the like.

Unless otherwise specified, all implementations and optional implementations of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, a method including steps (a) and (b) represents that the method may include sequentially performed steps (a) and (b), or sequentially performed steps (b) and (a). For example, mentioning that the method may further include step (c) represents that step (c) may be added to the method in any order. For example, the method may include steps (a), (b), and (c), or steps (a), (c), and (b), or steps (c), (a), and (b), etc.

As a result of misalignment of lithium element and metal elements in a laminar positive electrode material, the overall life of the material is poor. For example, the increase of the nickel content causes misalignment of more lithium and nickel, so that the cycle life of the battery is shortened.

**In** order to prolong the cycle life of the battery, this application provides a positive electrode material, including a laminar lithium-containing metal oxide, where the laminar lithium-containing metal oxide comprises other positive ions with a radius greater than a radius of lithium ions.

The laminar lithium-containing metal oxide means that the lithium-containing salt includes metal elements, for example, materials such as lithium manganate, lithium cobalt oxide, and lithium nickel cobalt manganese oxide.

The laminar lithium-containing metal oxide includes the other positive ions with the radius greater than the radius of the lithium ions, which means that the laminar lithium-containing metal oxide not only includes the lithium ions, but also includes the other positive ions with the radius greater than the radius of the lithium ions.

The radius of the other positive ions in the positive electrode material is greater than the radius of the lithium ions, so that the other positive ions may play a supporting role in a laminar material to enhance a misalignment energy barrier, alleviate the problem of aggravated misalignment of metal ions and lithium ions in a laminar negative electrode, and improve the stability of the laminar structure, so as to improve the cycle performance. Moreover, the other positive ions in the positive electrode material may also be embedded into a negative electrode material, where the other positive ions with the greater ionic radius play a supporting role in graphite, so as to reduce expansion/shrinkage of the graphite in the process that the ions with the less ionic radius are intercalated/deintercalated, which contributes to improving the stability of an SEI film, reducing the consumption of active lithium, and improving the cycle performance.

It may be understood that the other positive ions with the radius greater than the radius of the lithium ions are only intercalated into the graphite layer of the negative electrode in the first charge-discharge process to play a role of permanently supporting the laminar structure of the graphite, that is, the other positive ions with the radius greater than the radius of the lithium ions play a role of supporting the laminar structure in the positive and negative electrode materials, so that the lithium ions are intercalated and deintercalated.

It may be understood that the positions of the other positive ions with the radius greater than the radius of the lithium ions may be positions replacing other ions except for the lithium ions (for example, in an example, the laminar lithium-containing metal oxide is a nickel cobalt manganese-based ternary material, and the other positive ions may replace, for example, part of manganese sites), and may also be positions replacing part of the lithium ions, which are not specifically limited and may be selected by those skilled in the art according to an actual demand.

Further, the laminar lithium-containing metal oxide includes a laminar lithium-containing transition metal oxide; and/or the ionic radius of the other positive ions is greater than 76 Pm.

Further, the ionic radius of the other positive ions is greater than 84 Pm and less than 100 Pm.

The laminar lithium-containing metal oxide includes a laminar lithium-containing transition metal oxide. Compared with other metals, transition metals in the laminar lithium-containing transition metal oxide are more liable to misalignment with lithium. By using the other positive ions with the radius greater than the diameter of lithium ions in the laminar lithium-containing transition metal oxide, the stability of the laminar structure may be effectively improved.

The radius of the lithium ions is 76 Pm, and the positive ions greater than 76 Pm can effectively play a supporting role in the laminar material to improve the stability of the laminar structure, thereby improving the cycle performance.

Further, the ionic radius of the other positive ions is greater than 84 Pm and less than 100 Pm. The ionic radius of the other positive ions is in a range of 84-100 Pm to guarantee that the other positive ions are effectively embedded into the laminar structure to play a supporting role in the laminar structure, so as to enhance the misalignment barrier, alleviate the problem of aggravated misalignment of the metal ions and lithium ions in the laminar negative electrode and improve the stability of the laminar structure, thereby improving the cycle performance.

Further, positions of the lithium ions in the laminar lithium-containing metal oxide structure are defined as lithium sites, and the other positive ions occupy at least part of the lithium sites in the laminar lithium-containing metal oxide structure.

In the laminar lithium-containing metal oxide structure, the elements have their own arrangement positions. Positions of the lithium ions in the laminar lithium-containing metal oxide structure are defined as lithium sites, and the other positive ions occupy at least part of the lithium sites in the laminar lithium-containing metal oxide structure. In order to reduce the misalignment of the lithium ions and the metal ions, part of lithium sites of the laminar positive electrode material are replaced with the other positive ions with a greater ionic radius. Moreover, the radius of the other positive ions is great and the other positive ions occupy the lithium sites stably, so that further misalignment is avoided. Therefore, the stability of the laminar structure is improved.

Further, the other positive ion elements include at least one of an alkali metal element, an alkaline earth metal element, and a non-metallic element except for a lithium element.

The type of the other positive ions is not limited in this application, and the other positive ion elements include at least one of an alkali metal element, an alkaline earth metal element, and a non-metallic element except for a lithium element. It may be understood that ions may be ions with the radius theoretically greater than the radius of the lithium ions, preferably the metal ions.

Further, the alkali metal element includes at least one of Na, K, Rb, and Cs; the alkaline earth metal element includes at least one of Ca and Sr; and the non-metallic element includes Se.

It may be understood that the alkali metal element includes at least one of Na, K, Rb, and Cs; the alkaline earth metal element includes at least one of Ca and Sr; and the non-metallic element includes Se.

Further, a general formula of the laminar lithium-containing metal oxide is LiₓY₍₂₋ₓ₎NiₐCo_{b}Mn_{c}M_{(1-a-b-c)}O₂, Y representing the other positive ions, and M including at least one of Mg, Zr, Al, B, Ta, Mo, W, Nb, Sb and La, where 0.3≤a<1.0, 0<b<0.5, 0≤c≤0.2, a+b+c≤1, and 0<x<2.

According to the requirement and design of the laminar positive electrode material, from the earliest low-nickel material to the high-nickel material nowadays is used. The overall life of the high-nickel material is poor. On the one hand, the increase of the nickel content will inevitably result in misalignment of more lithium and nickel, which shortens the cycle life of the battery. Misalignment of lithium and nickel refers to a phenomenon that bivalent nickel ions occupy the positions in the lithium ion lattices due to an action of an external factor when a lot of lithium ions are deintercalated during discharging as the volumes of the bivalent nickel ions are approximate to those of the lithium ions. Ion dislocation leads to a change in the type of a lattice, and accordingly changes the lithium intercalation capability of the lattice. During charging and discharging, the surface of a positive electrode material has the maximum pressure and the fastest speed for lithium deintercalation and intercalation, so that the surface often undergoes a change in a surface lattice due to such cation misalignment, and this phenomenon is also referred to as surface reconstruction. The higher the Ni content is, the higher the probability that trivalent unstable nickel ions are reduced to bivalent nickel ion is, so the chance of misalignment of the positive ions is higher. Therefore, the cycle life of the battery is more severely shortened.

The nickel-containing positive electrode material is used in this application to improve the energy density, and moreover, on the basis of the other positive ions with the radius greater than the radius of the lithium ions contained in the positive electrode material, the problem of aggravated misalignment of the nickel ions and the lithium ions in the laminar negative electrode can be effectively alleviated, and the stability of the laminar structure is improved, so that the cycle performance is further improved.

Further, a and b respectively meet the following relations: 0.6≤a<1.0, and 0.3<b<0.5.

In the general formula LiₓY₍₂₋ₓ₎NiₐCo_{b}Mn_{c}M_{(1-a-b-c)}O₂, 0<x<2, in the case of x>1, it indicates that the positive electrode material may be a lithium-rich material, for example, a lithium-rich manganese base.

In the general formula LiₓY₍₂₋ₓ₎NiₐCo_{b}Mn_{c}M_{(1-a-b-c)}O₂, 0.6≤a<1.0, 0.3<b<0.5, it indicates that the positive electrode material is a high-nickel material, which can effectively alleviate the problem of aggravated misalignment of the nickel ions and the lithium ions in the laminar negative electrode and improve the stability of the laminar structure, so that in the case of improving the cycle performance, the energy density can be effectively improved by using the high-nickel material.

Further, 0<x<1.

0<x<1. The positive electrode material may be a ternary material. Compared with other metals, the transition metals in the ternary material are more liable to misalignment with lithium. In this case, 0<x<1, indicating that in the general formula LiₓY₍₂₋ₓ₎NiₐCo_{b}Mn_{c}M_{(1-a-b-c)}O₂, the content of the other positive ions represented by Y is increased, which is beneficial to increase of the misalignment energy barrier, alleviate the problem of aggravated misalignment of the nickel ions and the lithium ions in the laminar negative electrode and improve the stability of the laminar structure, so that the cycle performance is improved.

Further, this application provides a preparation method of a positive electrode material, including the following steps: adding the metal salt into the solvent, and stirring the mixture to obtain the metal salt solution; adding the precipitant into the metal salt solution to obtain the precursor; and mixing the precursor, a lithium salt, and the salt of the other positive ions, and calcining the mixture to obtain the laminar lithium-containing metal oxide, where the radius of the other positive ions in the salt of the other positive ions is greater than the radius of the lithium ions.

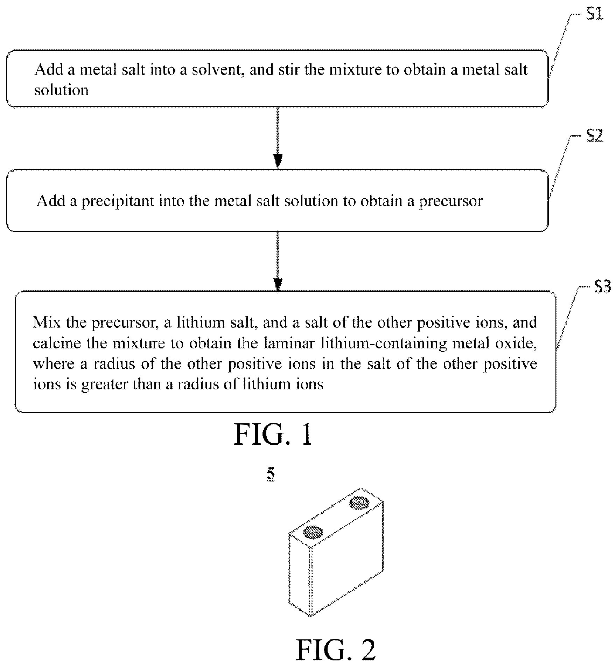

As shown in FIG. 1, it is a schematic diagram of a flow of a preparation method of a positive electrode material according to this application, including the following steps: adding the metal salt into the solvent, and stirring the mixture to obtain the metal salt solution; adding the precipitant into the metal salt solution to obtain the precursor; and mixing the precursor, a lithium salt, and the salt of the other positive ions, and calcining the mixture to obtain the laminar lithium-containing metal oxide, where the radius of the other positive ions in the salt of the other positive ions is greater than the radius of the lithium ions.

The metal salt is precipitated with the precipitant to obtain the precursor, and the precursor and the salt of the lithium salt and the other positive ions are mixed, and calcined to obtain the laminar lithium-containing metal oxide, where the radius of the other positive ions in the salt of the other positive ions is greater than the radius of the lithium ions.

It may be understood that in the process of mixing and calcining the precursor, the lithium salt and the salt of the other positive ions, mixed components are triturated first before calcining, where the triturating mode is not limited and may be milling, grinding, ball-milling, and the like. The triturating step may make the positive electrode material structure prepared uniform and stable in performance.

The radius of the other positive ions in the positive electrode material is greater than the radius of the lithium ions, so that the other positive ions may play a supporting role in a laminar material to enhance a misalignment energy barrier, alleviate the problem of aggravated misalignment of metal ions and lithium ions in a laminar negative electrode, and improve the stability of the laminar structure, so as to improve the cycle performance. Moreover, the other positive ions in the positive electrode material may also be embedded into a negative electrode material, where the other positive ions with the greater ionic radius play a supporting role in graphite, so as to reduce expansion/shrinkage of the graphite in the process that the ions with the less ionic radius are intercalated/deintercalated, which contributes to improving the stability of an SEI film, reducing the consumption of active lithium, and improving the cycle performance.

It may be understood that the lithium salt is selected from one or more of lithium sulfate, lithium chloride, lithium nitrite, lithium acetate, lithium carbonate, and lithium hydroxide.

It may be understood that the metal salt is added into the solvent, and the solvent includes water.

Further, the radius of the other positive ions is greater than 76 Pm.

The radius of the lithium ions is 76 Pm, and the positive ions greater than 76 Pm can effectively play a supporting role in the laminar material to improve the stability of the laminar structure, thereby improving the cycle performance.

Further, positions of the lithium ions in the laminar lithium-containing metal oxide structure are defined as lithium sites, and the other positive ions occupy at least part of the lithium sites in the laminar lithium-containing metal oxide structure.

In the laminar lithium-containing metal oxide structure, the elements have their own arrangement positions. Positions of the lithium ions in the laminar lithium-containing metal oxide structure are defined as lithium sites, and the other positive ions occupy at least part of the lithium sites in the laminar lithium-containing metal oxide structure. In order to reduce the misalignment of the lithium ions and the metal ions, part of lithium sites of the laminar positive electrode material are replaced with the other positive ions with a greater ionic radius. Moreover, the radius of the other positive ions is great and the other positive ions occupy the lithium sites stably, so that further misalignment is avoided. Therefore, the stability of the laminar structure is improved.

Further, a general formula of the laminar lithium-containing metal oxide is LiₓY₍₂₋ₓ₎NiₐCo_{b}Mn_{c}M_{(1-a-b-c)}O₂, Y representing the other positive ions, and M including at least one of Mg, Zr, Al, B, Ta, Mo, W, Nb, Sb and La, where 0.3≤a<1.0, 0<b<0.5, 0≤c≤0.2, a+b+c≤1, and 0<x<2.

The nickel-containing positive electrode material is used in this application to improve the energy density, and moreover, on the basis of the other positive ions with the radius greater than the radius of the lithium ions contained in the positive electrode material, the problem of aggravated misalignment of the nickel ions and the lithium ions in the laminar negative electrode can be effectively alleviated, and the stability of the laminar structure is improved, so that the cycle performance is further improved.

Further, a type of the salt of the other positive ions includes at least one of an alkali metal salt, an alkaline earth metal salt, and a non-metallic salt.

The type of the salt of the other positive ions is not limited in this application, and the type of the salt of the other positive ion elements includes at least one of an alkali metal salt, an alkaline earth metal salt, and a non-metallic salt. It may be understood that elements can be ions with the radius theoretically greater than the radius of the lithium ions, preferably the metal ions.

Further, the step of adding the precipitant into the metal salt solution to obtain the precursor includes the following steps: adding the precipitant into a metal salt solution, performing a reaction for 3-20 h, and performing aging for 2-12 h to obtain the precursor.

It may be understood that the reaction lasts for 3-20 h. The reaction time is reaction time for generating primary particles. As the particles are crushed in the reaction process, ageing for 2-12 h may help the primary particle lattices repair and grow.

In the above 3-20 h, the value includes the minimum value and the maximum value of the range and each value between the minimum value and the maximum value. A specific example includes, but is not limited to, point values in the examples and 3 h, 5 h, 8 h, 10 h, 14 h, 16 h, 18 h, 20 h and the like.

In the above 2-12 h, the value includes the minimum value and the maximum value of the range and each value between the minimum value and the maximum value. A specific example includes, but is not limited to, point values in the examples and 2 h, 3 h, 5 h, 8 h, 10 h, 12 h, and the like.

Further, the step of adding the precipitant into the metal salt solution to obtain the precursor further includes the following steps: adding the precipitant into the metal salt solution, performing a reaction for 3-20 h, performing aging for 2-12 h, and washing and drying a product to obtain the precursor.

In the process of preparing the precursor, impurities are removed through a cleaning step, so that the problem of impurities in the finally prepared positive electrode material is alleviated, and the performance of the battery is improved. It may be understood that the drying temperature is 100-140°C, the drying time is 12-24 h, for example, the product is washed with deionized water for 3 times, the product is placed at 100°C to be vacuum-dried for 12 h after being dried by an air blower, and a dried solid is collected as the precursor.

Further, in the step of mixing and calcining the precursor, the lithium salt, and the salt of the other positive ions to obtain the laminar lithium-containing metal oxide, the mass ratio of the precursor, the lithium salt, and the salt of the other positive ions is defined as P: Q: R, which meets (Q+R)/P≥1.07.

The excessive lithium salt and the salt of the other positive ions are intended to compensate the loss of lithium and other positive ions in high-temperature calcining. Therefore, in the step of mixing the precursor, the lithium salt, and the salt of the other positive ions and calcining the mixture to obtain the laminar lithium-containing metal oxide, the lithium salt and the salt of the other positive ions are added excessively, that is, the mass ratio of the precursor, the lithium salt, and the salt of the other positive ions is defined as P: Q: R, which meets (Q+R)/P≥1.07.

Further, calcining time in the calcining process is 17-28 h.

In the calcining process, the lithium element and the other positive ion elements can be more rapidly and uniformly blended into the lattices of the precursor material, so as to play doping roles of doping elements. In the above 17-28 h, the value includes the minimum value and the maximum value of the range and each value between the minimum value and the maximum value. A specific example includes, but is not limited to, point values in the examples and 17 h, 18 h, 19 h, 20 h, 21 h, 22 h, 25 h, 27 h, 28 h, and the like.

Further, a calcining program in the calcining process is as follows: raising the temperature from the room temperature to 400-500°C at a heating rate of 3°Cmin⁻¹-5°Cmin⁻¹, performing precalcining for 5-8 h, then raising the temperature to 700-900°C, and performing calcining for 12-20 h.

That is, in the calcining program, the heating rate may be 3°Cmin⁻¹, 4°Cmin⁻¹, and 5°Cmin⁻¹. At room temperature, the mixture is heated to 400°C, 450°C or 500°C at a certain heating rate, precalcined for 5 h, 6 h, 7 h or 8 h, then heated to 700°C, 800°C or 900°C, and calcined for 12 h, 13 h, 14 h, 15 h, 16 h, 18 h, 19 h or 20 h.

Further, the metal salt includes a transition metal salt; and/or, the precipitant includes at least one of oxalate and carbonate.

The metal salt is not limited in this application. For example, it may be the transition metal salt, for example, at least one of a nickel salt, a cobalt salt, and a manganese salt. It may be understood that the nickel salt is selected from one or more of nickel sulfate, nickel chloride, nickel nitrate, and nickel acetate. The manganese salt is selected from one or more of manganese sulfate, manganese chloride, manganese nitrate, and manganese acetate. The cobalt salt is selected from one or more of cobalt sulfate, cobalt chloride, cobalt nitrate, and cobalt acetate.

The precipitant may be at least one of oxalate and carbonate. It may be understood that the oxalate is selected from one or more of sodium oxalate, sodium hydrogen oxalate, potassium oxalate, potassium hydrogen oxalate, ammonium oxalate, and ammonium bioxalate. The carbonate is selected from one or more of sodium carbonate, sodium hydrogen carbonate, potassium carbonate, potassium hydrogen carbonate, ammonium carbonate, and ammonium hydrogen carbonate.

Further, this application provides a negative electrode plate, including a current collector and a coating disposed on the current collector, the coating including the positive electrode material described above, or the coating including the positive electrode material prepared by the preparation method of the positive electrode material described above.

Since the positive electrode material uses all the technical solutions of all the examples described above, the positive electrode material at least has all the beneficial effects brought by the technical solutions of the examples described above, which are no longer described repeatedly herein.

Because the radius of the other positive ions in the positive electrode material is greater than the radius of the lithium ions, the other positive ions may play a supporting role in a laminar material to enhance a misalignment energy barrier, alleviate the problem of aggravated misalignment of metal ions and lithium ions in a laminar negative electrode, and improve the stability of the laminar structure, so as to improve the cycle performance. Moreover, the other positive ions in the positive electrode material may also be embedded into a negative electrode material, where the other positive ions with the greater ionic radius play a supporting role in graphite, so as to reduce expansion/shrinkage of the graphite in the process that the ions with the less ionic radius are intercalated/deintercalated, which contributes to improving the stability of an SEI film, reducing the consumption of active lithium, and improving the cycle performance. Therefore, the negative electrode plate including the positive electrode material described above has high cycle performance.

Further, a compacted density Pd of the negative electrode plate meets the following relation: Pd=S*K, where S is a mass ratio of the positive electrode material to an entire positive electrode active material in the coating, K is a coefficient, 0<S≤100%, and 0<K<100.

A compacted density Pd of the negative electrode plate meets the following relation: Pd=S*K, where S is a mass ratio of the positive electrode material to an entire positive electrode active material in the coating, K is a coefficient, 0<S≤100%, and 0<K<100.

The greater the S is, the stronger the hierarchical energy barrier of the negative electrode plate is, so are the structural stability and the resistance to pressure. The negative electrode plate may realize a higher upper limit of the compacted density.

That is, the compacted density is in direct proportion to the S. The greater the compacted density is, the greater the incorporating amount of the needed positive electrode material is. The greater compacted density indicates that the gaps in the material become small. To expand the gaps, more other positive ions with the radius greater than the radius of the lithium ions are needed to support the material layer.

In the above 0<S≤100%, the value includes the minimum value and the maximum value of the range and each value between the minimum value and the maximum value. A specific example includes, but is not limited to, point values in the examples and 0.5%, 1%, 5%, 10%, 15%, 20%, 25%, 30%, 35%, 40%, 45%, 50%, 55%, 60%, 65%, 70%, 75%, 80%, 85%, 90%, 95%, 100%, and the like.

In the above 0<K<100, the value includes the minimum value and the maximum value of the range and each value between the minimum value and the maximum value. A specific example includes, but is not limited to, point values in the examples and 0.5, 1, 5, 10, 15, 20, 25, 30, 35, 40, 45, 50, 55, 60, 65, 70, 75, 80, 85, 90, 95, 99, and the like.

Further, S and K respectively meet the following relations: 10%<S≤90% and 0<K < 10.

Since part of lithium sites in the positive electrode material are replaced with other positive ions, if the positive electrode material is used in entire positive electrode active material, there will be a problem of lithium reduction, which results in a problem of energy density reduction. Therefore, the mass ratio of the positive electrode material in the entire positive electrode active material in the coating is 10% < S≤90%. Therefore, the entire positive electrode active material further includes other active materials such as other ternary materials. Lithium sites in the ternary materials are not replaced with other elements to improve the capacity of lithium, so that the energy density of the battery is improved.

When the mass ratio of the positive electrode material in the entire positive electrode active material meets 10%<S≤90%, that is, the doping amount> 10%, the amount of the ions with greater radius in the positive electrode material is enough to support interlamination of the positive electrode material. Excessive ions may be deintercalated and intercalated into the graphite to reduce expansion.

In the above 10% < S≤90%, the value includes the minimum value and the maximum value of the range and each value between the minimum value and the maximum value. A specific example includes, but is not limited to, point values in the examples and 11%, 15%, 20%, 25%, 30%, 35%, 40%, 45%, 50%, 55%, 60%, 65%, 70%, 75%, 80%, 85%, 90%, and the like.

In the above 0<K<10, the value includes the minimum value and the maximum value of the range and each value between the minimum value and the maximum value. A specific example includes, but is not limited to, point values in the examples and 0.5, 1, 2, 3, 4, 5, 6, 7, 8, 9, and the like.

Further, the entire positive electrode active material in the coating accounts for 85-99% of the total mass of the coating.

The entire positive electrode active material in the coating accounts for 85-99% of the total mass of the coating. In the above 85-99%, the value includes the minimum value and the maximum value of the range and each value between the minimum value and the maximum value. A specific example includes, but is not limited to, point values in the examples and 85%, 86%, 87%, 88%, 89%, 90%, 91%, 92%, 93%, 94%, 95%, 96%, 97%, 99%, and the like.

Further, a value of the compacted density of the negative electrode plate is in a range of 2.0 g/cm³ to 4.5 g/cm³.

A negative electrode plate, including a current collector and the positive electrode material disposed on the current collector.

A compacted density, the compacted density=areal density (thickness of the plate ground-thickness of the current collector), with a unit: g/cm³.

With the increase of the compacted density, the volume density of the active layer will be increased, the porosity will be decreased, the specific surface area is increased, the contact resistance is decreased, the SEI impedance of an electrolyte interfacial film of an electrode will be decreased, and the charge exchange impedance is decreased. The lower compacted density, on the contrary, will lead to a problem of low specific discharge capacity, which is mainly because that the higher porosity enables part of particles form an insulative state and is unable to take part in charge and discharge while the electrode with high compacted density features higher breaking strength, which reduces the risk of the particles in the insulative state as the electrode particles fall off in the cyclic process. The high compacted density may make distribution of pore diameter and pores of the electrode more uniform significantly. The conductive agent and the binder are distributed more uniformly, the contact resistance and the charge exchange impedance of the electrode are reduced, and the active area capable of taking part in the reaction is increased, so that the electrochemical performance of the material is significantly improved.

Therefore, an appropriate compacted density is needed in the negative electrode plate. In this application, a value of the compacted density of the negative electrode plate is in a range of 2.0 g/cm³ to 4.5 g/cm³. When the compacted density of the negative electrode plate is lower than 2.0 g/cm³, the particles have poor contact and transmission impedance, fast life attenuation, and fail to improve the life. When the compacted density of the negative electrode plate is higher than 4.5 g/cm³, interlaminar pores are small, ions with great radius cannot be deintercalated, part of large ions cannot be deintercalated and intercalated into the graphite layer, so that expansion is reduced, resulting in partial failure in life improvement.

In the negative electrode plate, the range value of the compacted density of the negative electrode plate is 2.0 g/cm³-4.5 g/cm³. The compacted density is set within the range, so that the problem that the compacted density is too low is alleviated. Moreover, the problem of partial failure in life improvement as the compacted density is too high, the gaps between the materials become small, part of large ions cannot be deintercalated and intercalated into the graphite layer, and the expansion is reduced is further alleviated.

It may be understood that the value of the compacted density of the negative electrode plate is 2.0 g/cm³-4.5 g/cm³. In the above 2.0 g/cm³-4.5 g/cm³, the value includes the minimum value and the maximum value of the range and each value between the minimum value and the maximum value. A specific example includes, but is not limited to, point values in the examples and 2.0 g/cm³, 2.2 g/cm³, 2.4 g/cm³, 2.8 g/cm³, 2.9 g/cm³, 3.0 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, 4.0 g/cm³, 4.2 g/cm³, 4.4 g/cm³, 4.5 g/cm³, and the like.

Further, the value of the compacted density of the negative electrode plate is preferably 2.8 g/cm³ to 3.5 g/cm³.

The value of the compacted density of the negative electrode plate is 2.8 g/cm³-3.5 g/cm³. In the above 2.8 g/cm³-3.5 g/cm³, the value includes the minimum value and the maximum value of the range and each value between the minimum value and the maximum value. A specific example includes, but is not limited to, point values in the examples and 2.8 g/cm³, 2.9 g/cm³, 3.0 g/cm³, 3.1 g/cm³, 3.2 g/cm³, 3.3 g/cm³, 3.4 g/cm³, 3.5 g/cm³, and the like.

Further, this application further provides an electrode assembly, including a positive electrode plate, a separator, and the negative electrode plate described above.

Since the negative electrode material uses all the technical solutions of all the examples described above, the negative electrode material at least has all the beneficial effects brought by the technical solutions of the examples described above, which are no longer described repeatedly herein.

Further, a negative electrode material of the positive electrode plate includes at least one of graphite, hard carbon, and soft carbon.

It may be understood that the negative electrode material of the positive electrode plate includes at least one of graphite, hard carbon, and soft carbon.

Further, this application further provides a battery, including the electrode assembly described above.

Since the electrode assembly uses all the technical solutions of all the examples described above, the electrode assembly at least has all the beneficial effects brought by the technical solutions of the examples described above, which are no longer described repeatedly herein.

Further, this application further provides an electric device, including the battery described above.

Since the battery uses all the technical solutions of all the examples described above, the battery at least has all the beneficial effects brought by the technical solutions of the examples described above, which are no longer described repeatedly herein.

In addition, the following appropriately describes an electrode assembly, a battery (including a battery module and a battery pack), and an electric apparatus of this application with reference to the accompanying drawings.

In one implementation of this application, an electrode assembly is provided.

Under normal circumstances, the electrode assembly includes the negative electrode plate, the positive electrode plate, the electrolyte, and the separator. In the charge-discharge process of the battery, active ions are intercalated and deintercalated to and from between the negative electrode plate and the positive electrode plate. The electrolyte plays a role of conducting ions between the positive electrode plate and the negative electrode plate. The separator is disposed between the negative electrode plate and the positive electrode plate to mainly play a role of preventing the positive and positive electrodes from being short-circuited and making ions pass through. The separator is the improved separator described in this application.

The negative electrode plate includes a positive electrode current collector and a positive electrode film disposed on at least one surface of the positive electrode current collector.

As an example, the positive electrode current collector has two surfaces opposite in its own thickness direction, and the positive electrode film layer is disposed on either one or both of the two opposite surfaces of the positive electrode current collector.

In some implementations, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, or the like) on a polymer material substrate (e.g., a substrate of polypropylene (PP), polyethylene terephthalate (PET), polybutylene terephthalate (PBT), polystyrene (PS), or polyethylene (PE)).

In some implementations, when the electrode assembly is a lithium-ion battery, a positive electrode active material may be a positive electrode active material well-known in the art for lithium-ion batteries. As an example, the positive electrode active material may include at least one of the following materials: lithium-contained phosphate with an olivine structure, lithium transition metal oxide, and their respective modified compounds. However, this application is not limited to these materials, and another conventional material that can be used as a positive electrode active material of a battery may also be used. One of these positive electrode active materials may be used alone or two or more thereof may be combined for use. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂, or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.85}Co_{0.15}Al_{0.05}O₂) and a modified compound thereof, or the like. Examples of the lithium-contained phosphate with an olivine structure may include, but are not limited to, at least one of lithium iron phosphate (e.g., LiFePO₄ (also simply referred to as LFP)), a composite material of lithium iron phosphate and carbon, lithium manganese phosphate (e.g., LiMnPO₄), a composite material of lithium manganese phosphate and carbon, lithium ferro-manganese phosphate, or a composite material of lithium ferro-manganese phosphate and carbon.

Deintercalation and consumption of Li occur during charging and discharging of the battery, and the molar content of Li varies when the battery is discharged to different states. In the enumeration of the positive electrode material in this application, the molar content of Li is an initial state of the material, i.e., a state before adding. The positive electrode material is applied to a battery system, and the molar content of Li changes after charging and discharging cycles.

In the enumeration of the positive electrode material in this application, the molar content of O is only a theoretical state value, the molar content of oxygen changes due to the release of oxygen from a lattice, and the actual molar content of O fluctuates.

In some implementations, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the negative electrode plate may be prepared by the following ways: dispersing components for preparing the negative electrode plate such as a positive electrode active material, a conductive agent, a binder, and any other components in a solvent (for example, N-methyl pyrrolidone) to form a positive electrode slurry; and coating the positive electrode slurry to the positive electrode current collector, and performing steps such as drying and cold-pressing to obtain the negative electrode plate.

The positive electrode plate includes a negative electrode current collector and a negative electrode film disposed on at least one surface of the positive electrode current collector, the negative electrode film including a negative electrode active material.

As an example, the negative electrode current collector has two surfaces opposite in its own thickness direction, and the negative electrode film layer is disposed on either one or both of the two opposite surfaces of the negative electrode current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode active material may be a negative electrode active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

In some implementations, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode film layer further optionally includes another auxiliary agent, for example, a thickening agent (e.g., sodium carboxymethyl cellulose (CMC-Na)).

In some implementations, the positive electrode plate may be prepared by the following ways: dispersing components for preparing the positive electrode plate such as a negative electrode active material, a conductive agent, a binder, and any other components in a solvent (for example, deionized water) to form a negative electrode slurry; and coating the negative electrode slurry to the negative electrode current collector, and performing steps such as drying and cold-pressing to obtain the positive electrode plate.

The electrolyte plays a role of conducting ions between the positive electrode plate and the negative electrode plate. The type of the electrolyte is not specifically limited in this application, and may be selected according to a requirement.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, ethyl methyl sulfone, and diethyl sulfone.

In some implementations, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the electrode assembly further includes a separator. This application has no particular limitation to the type of the separator, and any known porous structure separator with good chemical stability and mechanical stability may be used.

In some implementations, a material of the separator may be selected from at least one of glass fiber, a non-woven fabric, polyethylene, polypropylene, and polyvinylidene fluoride. The separator may be either a single-layer film or a multi-layer composite film, which is not specially limited. In a case that the separator is the multi-layer composite film, the materials of the layers may be same or different, which is not specially limited.

In some implementations, the negative electrode plate, the positive electrode plate, and the separator may be prepared into an electrode assembly through a winding process or a stacking process.

In some implementations, the electrode assembly may include an outer package. The outer package may be used to package the electrode assembly and the electrolyte.

In some implementations, the outer package of the electrode assembly may be a hard casing, for example, a hard plastic casing, an aluminum casing, or a steel casing. The outer package of the electrode assembly may alternatively be a pouch, such as a bag-type pouch. The material of the pouch may be plastic, and examples of the plastic include polypropylene, polybutylene terephthalate, polybutylene succinate, and the like.

The shape of the electrode assembly is not particularly limited in this application, and may be cylindrical, square, or any other shape. For example, FIG. 2 shows a battery cell 5 with a square structure as an example.

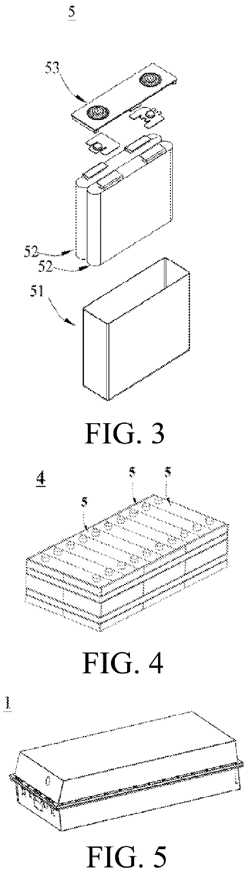

In some implementations, referring to FIG. 3, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber. The negative electrode plate, the positive electrode plate, and the separator may be prepared into an electrode assembly 52 through a winding process or a stacking process. The electrode assembly 52 is packaged in the accommodating chamber. The electrolyte solution is impregnated into the electrode assembly 52. There may be one or a plurality of electrode assemblies 52 included in the battery cell 5, and those skilled in the art may select according to specific actual requirements.

In some implementations, the electrode assembly may be assembled into a battery module, there may be one or a plurality of electrode assemblies included in the battery module, and those skilled in the art may select a specific quantity based on the application and capacity of the battery module.

FIG. 4 shows a battery module 4 as an example. Referring to FIG. 4, in the battery module 4, a plurality of battery cells 5 may be arranged sequentially in the length direction of the battery module 4. Certainly, the battery cells may alternatively be arranged in any other manner. Further, the plurality of battery cells 5 may be fastened by using fasteners.

Optionally, the battery module 4 may further include a housing having an accommodating space in which the plurality of battery cells 5 are accommodated.

In some implementations, the above-mentioned battery module may be further assembled into a battery pack, there may be one or a plurality of battery modules included in the battery pack, and those skilled in the art may select a specific quantity based on the application and capacity of the battery pack.

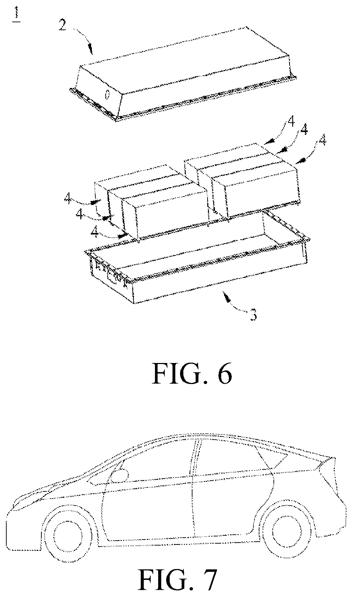

FIG. 5 and FIG. 6 show a battery pack 1 as an example. Referring to FIG. 5 and FIG. 6, the battery pack 1 may include a battery case and a plurality of battery modules 4 disposed in the battery case. The battery case includes an upper case 2 and a lower case 3, the upper case 2 being capable of covering on the lower case 3 to form a closed space for accommodating the battery modules 4. The plurality of battery modules 4 may be arranged in any manner in the battery case.

In addition, this application further provides an electric apparatus including at least one of the electrode assembly, the battery module, or the battery pack provided by this application. The electrode assembly, the battery module, or the battery pack may be used as a power supply of the electric apparatus and may also be used as an energy storage unit of the electric apparatus. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

As an electric apparatus, an electrode assembly, a battery module, or a battery pack may be selected according to a usage requirement of the electric apparatus.

FIG. 7 shows an electric apparatus as an example. The electric apparatus is a battery electric vehicle, a hybrid electric vehicle, a plug-in hybrid electric vehicle, or the like. To meet a requirement for a high power and a high energy density of an electrode assembly by the electric apparatus, a battery pack or a battery module may be used.

In another example, the apparatus may be a cell phone, a tablet computer, a notebook computer, or the like. This apparatus is generally required to be thin and lightweight, and an electrode assembly can be used as a power supply.

### Embodiments

### Embodiment 1

Preparation of a positive electrode material Li_{0.5}Na_{0.1}K_{0.2}Cs_{0.05}Rb_{0.15}Ni_{0.5}Co_{0.2}Mn_{0.3}O₂:

First, nickel acetate, cobaltous acetate, and manganese acetate were added into deionized water at a stoichiometric ratio (5: 2: 3) to be uniformly stirred. A sodium carbonate solution was fast poured into a transition metal salt solution to continuously react for different 9 h, and then the mixture was left stand for ageing for 4 h to make primary particles grow. The mixture was washed with deionized water for 3 times, the mixture was placed at 100°C to be vacuum-dried for 12 h after being dried by an air blower, and a dried solid was collected as the precursor.

The precursor was uniformly mixed and ground with lithium carbonate, sodium carbonate, potassium carbonate, cesium carbonate, and rubidium carbonate at a molar ratio of 1: 0.535: 0.107: 0.216: 0.0535: 0.1605, where excessive lithium carbonate was intended to compensate the loss of lithium in high-temperature calcining. A fully ground solid powder was transferred into a crucible, and the crucible was placed in a programmed temperature muffle furnace for calcining. A calcining program was as follows: precalcining was performed for 5 h from room temperature to 500°C, then the mixture was calcined at a high temperature 800°C for 12 h, where the heating rate was 3°Cmin⁻¹, and then the mixture was cooled to room temperature, and a Li_{0.5}Na_{0.1}K_{0.2}Cs_{0.05}Rb_{0.15}Ni_{0.5}Co_{0.2}Mn_{0.3}O₂ material was collected.

### Preparation of a negative electrode plate of a secondary battery:

Polyvinylidene fluoride (PVDF), a positive electrode material, and a conductive agent (carbon black Super P) were mixed at a mass ratio of 90: 5: 5, the adding amount of a solvent was added (N-methyl pyrrolidone (NMP)), the viscosity of a slurry was controlled at 100-20000mPa.s, and the slurry was coated to a negative electrode current collector by using a coating machine or a spraying machine. The negative electrode plate was dried at 85°C and was subjected to cold pressing. The compacted density of the negative electrode plate was set at 2.9 g/cm³. Then, the negative electrode plate was trimmed, cut, and stripped, and then dried in a vacuum condition at 85°C for 4 h. Tabs were welded to the negative electrode plate to prepare the negative electrode plate of the secondary battery, which met requirements.

Based on embodiment 1, the type of the positive electrode material, the proportion of the positive electrode material in active substances, and the compacted density of the negative electrode plate are changed to obtain embodiment 2 to embodiment 8, and comparative example 1 as well. Specific parameters are shown in table 1.

### Electrical Performance Characterization

### Cycling performance test:

Test conditions for test cycles are as follows: 1C/1C cycle tests are performed on a secondary battery at 25°C and 45°C, a charging and discharging voltage range is 2.8 V~4.35 V, and the tests are stopped when the capacity attenuates to 80% of the first discharge specific capacity.

**Table 1 Table of Parameters Related to Embodiments**

| Classification | Positive electrode material | Proportion of positive electrode material in active substances | Compacted density g/cm³ of negative electrode plate | 25°C 1C/1C cycle life @80%SOH | 45°C 1C/1C cycle life @80%SOH |
|---|---|---|---|---|---|
| Embodiment 1 | Li_{0.5}Na_{0.1}K_{0.2}Cs_{0.05}Rb_{0.15}Ni_{0.5} Co_{0.2}Mn_{0.3}O₂ | 100% | 2.9 | 3500 | 2000 |
| Embodiment 2 | Li_{0.5}Na_{0.1}K_{0.4}Ni_{0.5}Co_{0.2}Mn_{0.3}O ₂ | 100% | 3.5 | 4000 | 2500 |
| Embodiment 3 | Li_{0.5}Na_{0.02}K_{0.2}Cs_{0.05}Rb_{0.15}Se_{0.0 2}Ni_{0.5}Co_{0.2}Mn_{0.3}O₂ | 100% | 3.5 | 2400 | 1250 |
| Embodiment 4 | Li_{0.5}Na_{0.1}K_{0.2}Cs_{0.05}Rb_{0.15}Ni_{0.5} Co_{0.2}Mn_{0.3}O₂ | 100% | 2.8 | 3200 | 1600 |
| Embodiment 5 | Li_{0.5}Na_{0.1}K_{0.2}Cs_{0.05}Rb_{0.15}Ni_{0.5} Co_{0.2}Mn_{0.3}O₂ | 100% | 3.5 | 3400 | 1850 |
| Embodiment 6 | Li_{0.5}Na_{0.1}K_{0.2}Cs_{0.05}Rb_{0.15}Ni_{0.5} Co_{0.2}Mn_{0.3}O₂ | 100% | 4.5 | 2200 | 1100 |
| Embodiment 7 | Li_{0.5}Na_{0.1}K_{0.2}Cs_{0.05}Rb_{0.15}Ni_{0.5} Co_{0.2}Mn_{0.3}O₂, LiNi_{0.5}Co_{0.2}Mn_{0.3}O₂ | 90% (Li_{0.5}Na_{0.1}K_{0.2}Cs_{0.0 5}Rb_{0.15}Ni_{0.5}Co_{0.2}M n_{0.3}), 20% (LiNi_{0.5}Co_{0.2}Mn_{0.3} O₂) | 2.9 | 3000 | 1500 |
| Embodiment 8 | Li_{0.5}Na_{0.1}K_{0.2}Cs_{0.05}Rb_{0.15}Ni_{0.5} Co_{0.2}Mn_{0.3}O₂, LiNi_{0.5}Co_{0.2}Mn_{0.3}O₂ | 50% (Li_{0.5}Na_{0.1}K_{0.2}Cs_{0.0 5}Rb_{0.15}Ni_{0.5}Co_{0.2}M n_{0.3}), 50% (LiNi_{0.5}Co_{0.2}Mn_{0.3} O₂) | 2.9 | 2500 | 1250 |
| Comparative example 1 | LiNi_{0.5}Co_{0.2}Mn_{0.3}O₂ | 100% | 2.9 | 2000 | 1000 |

In conclusion, if ions with greater radius are doped into the positive electrode material, the compacted density of the negative electrode is limited as 2.0 g/cm³-4.5 g/cm³, which contributes to improving the cyclic performance of the battery greatly. On the one hand, doping of the ions with greater radius plays a role of stabilizing the laminar structure of the negative electrode, so as to reduce the material loss. On the other hand, the ions with greater radius are intercalated into the graphite material through the electrolyte containing the ionic salt to support the laminar structure of the graphite, reduce the loss of active lithium, and improve the cyclic performance.

The foregoing are only preferred embodiments of this application, and are not intended to limit the patent scope of this application, and any equivalent structural modifications made by using the content of the specification and the accompanying drawings of this application under the concept of this application, directly/indirectly applied in other related technical fields, are included in the patent protection scope of this application.

## Claims

1. A positive electrode material comprising a laminar lithium-containing metal oxide, wherein the laminar lithium-containing metal oxide comprises other positive ions with a radius greater than a radius of lithium ions.

2. The positive electrode material according to claim 1, wherein the laminar lithium-containing metal oxide comprises a laminar lithium-containing transition metal oxide; and/or
the ionic radius of the other positive ions is greater than 76 Pm.

3. The positive electrode material according to claim 1 or 2, wherein the ionic radius of the other positive ions is greater than 84 Pm and less than 100 Pm.

4. The positive electrode material according to any one of claims 1 to 3, wherein positions of the lithium ions in the laminar lithium-containing metal oxide structure are defined as lithium sites, and the other positive ions occupy at least part of the lithium sites in the laminar lithium-containing metal oxide structure.

5. The positive electrode material according to any one of claims 1 to 4, wherein the other positive ion elements comprise at least one of an alkali metal element, an alkaline earth metal element, and a non-metallic element except for a lithium element.

6. The positive electrode material according to claim 5, wherein the alkali metal element comprises at least one of Na, K, Rb, and Cs;
the alkaline earth metal element comprises at least one of Ca and Sr; and
the non-metallic element comprises Se.

7. The positive electrode material according to any one of claims 1 to 6, wherein a general formula of the laminar lithium-containing metal oxide is LiₓY₍₂₋ₓ₎NiₐCo_{b}Mn_{c}M_{(1-a-b-c)}O₂, Y representing the other positive ions, and M comprising at least one of Mg, Zr, Al, B, Ta, Mo, W, Nb, Sb and La, wherein 0.3≤a<1.0, 0<b<0.5, 0≤c≤0.2, a+b+c≤1, and 0<x<2.

8. The positive electrode material according to claim 7, wherein 0.6≤a<1.0, and 0.3<b<0.5.

9. The positive electrode material according to claim 7 or 8, wherein 0<x<1.

10. A preparation method of the positive electrode material according to any one of claims 1 to 9, comprising the following steps:
adding a metal salt into a solvent, and stirring the mixture to obtain a metal salt solution;
adding a precipitant into the metal salt solution to obtain a precursor; and
mixing the precursor, a lithium salt, and a salt of the other positive ions, and calcining the mixture to obtain the laminar lithium-containing metal oxide,
wherein a radius of the other positive ions in the salt of the other positive ions is greater than a radius of lithium ions.

11. The preparation method of the positive electrode material according to claim 10, wherein a type of the salt of the other positive ions comprises at least one of an alkali metal salt, an alkaline earth metal salt, and a non-metallic salt.

12. The preparation method of the positive electrode material according to claim 10 or 11, wherein the step of adding a precipitant into the metal salt solution to obtain a precursor comprises the following step:
adding the precipitant into the metal salt solution, performing a reaction for 3-20 h, and performing aging for 2-12 h to obtain the precursor.

13. The preparation method of the positive electrode material according to any one of claims 10 to 12, wherein in the step of mixing the precursor, a lithium salt, and a salt of the other positive ions, and calcining the mixture to obtain the laminar lithium-containing metal oxide, the molar ratio of the precursor to the lithium salt to the salt of the other positive ions is defined as P:Q:R, meeting (Q+R)/P≥1.07.

14. The preparation method of the positive electrode material according to any one of claims 10 to 13, wherein calcining time in the calcining process is 17-28 h.

15. The preparation method of the positive electrode material according to any one of claims 10 to 14, wherein a calcining program in the calcining process is as follows: raising the temperature from the room temperature to 400-500°C at a heating rate of 3°Cmin⁻¹-5°Cmin⁻¹, performing precalcining for 5-8 h, then raising the temperature to 700-900°C, and performing calcining for 12-20 h.

16. The preparation method of the positive electrode material according to any one of claims 10 to 15, wherein the metal salt comprises a transition metal salt;
and/or, the precipitant comprises at least one of oxalate and carbonate.

17. A negative electrode plate, comprising a current collector and a coating disposed on the current collector, the coating comprising the positive electrode material according to any one of claims 1 to 9, or the coating comprising the positive electrode material prepared by the preparation method of the positive electrode material according to any one of claims 10 to 16.

18. The negative electrode plate according to claim 17, wherein a compacted density Pd of the negative electrode plate meets the following relation: Pd=S*K, wherein S is a mass ratio of the positive electrode material to an entire positive electrode active material in the coating, K is a coefficient, 0<S≤100%, and 0<K<100.

19. The negative electrode plate according to claim 18, wherein 10%<S≤90%, and 0<K < 10.

20. The negative electrode plate according to claim 18 or 19, wherein the entire positive electrode active material in the coating accounts for 85-99% of the total mass of the coating.

21. The negative electrode plate according to any one of claims 18 to 20, wherein a value of the compacted density of the negative electrode plate is in a range of 2.0 g/cm³ to 4.5 g/cm³.

22. The negative electrode plate according to any one of claims 18 to 21, wherein the value of the compacted density of the negative electrode plate is in a range of 2.8 g/cm³ to 3.5 g/cm³.

23. An electrode assembly, comprising a positive electrode plate, a separator, and the negative electrode plate according to any one of claims 17 to 22.

24. The electrode assembly according to claim 23, wherein a negative electrode material of the positive electrode plate comprises at least one of graphite, hard carbon, and soft carbon.

25. A battery, comprising the electrode assembly according to claim 23 or 24.

26. An electric device, comprising the battery according to claim 25.
